# EUROPÄISCHE PATENTSCHRIFT

(11) **EP 1 628 869 B1**
(45) Veröffentlichungstag und Bekanntmachung des Hinweises auf die Patenterteilung: **01.10.2008**
(21) Anmeldenummer: 04741608.6
(22) Anmeldetag: 19.05.2004
(51) Int. Cl.: B62D 5/04

(54) **ÜBERLAGERUNGSLENKUNG**
SUPERIMPOSED STEERING SYSTEM
DIRECTION A SUPERPOSITION

(30) Priorität: 23.05.2003 DE 10323847
(43) Veröffentlichungstag der Anmeldung: 01.03.2006
(73) Patentinhaber: Continental Teves AG & Co. oHG, 60488 Frankfurt am Main (DE)
(72) Erfinder: JUNGBECKER, Johann, 55576 Badenheim (DE); LINKENBACH, Steffen, 65760 Eschborn (DE); NELL, Joachim, 63452 Hanau (DE); MUTH, Norman, 35066 Frankenberg (DE)
(74) Vertreter: Graf, Ulrich
(86) Internationale Anmeldenummer: PCT/EP2004/050863
(87) Internationale Veröffentlichungsnummer: WO 2004/103799

(56) Entgegenhaltungen:
- WO-A-03/055732
- DE-A- 3 121 008
- DE-A- 10 023 584
- DE-A- 10 160 313
- US-A- 4 751 976
- US-A- 6 164 150
- US-A1- 2003 070 867
- US-B1- 6 179 083
- US-B1- 6 382 344
- US-B1- 6 520 274

## Beschreibung

Die Erfindung betrifft eine Überlagerungslenkung, bei der ein vom Fahrer eingegebener Lenkwinkel bei Bedarf durch einen weiteren Winkel überlagert werden kann.

Heutige Kraftfahrzeuge, insbesondere Personenkraftwagen, sind in der Regel mit hydraulischen oder elektrohydraulischen Servolenkungen ausgestattet, bei denen ein Lenkrad mechanisch mit den lenkbaren Fahrzeugrädern zwangsgekoppelt ist. Die Servounterstützung ist derart aufgebaut, dass im Mittelbereich des Lenkmechanismus Aktuatoren, z.B. Hydraulikzylinder, angeordnet sind. Durch eine von den Aktuatoren erzeugte Kraft wird die Betätigung des Lenkmechanismus in Reaktion auf die Drehung des Lenkrads unterstützt. Dadurch ist der Kraftaufwand des Fahrers beim Lenkvorgang verringert.

Überlagerungslenkungen sind bekannt. Sie sind dadurch charakterisiert, dass dem vom Fahrer eingegebenen Lenkwinkel bei Bedarf ein weiterer Winkel durch einen Aktuator überlagert werden kann. Der zusätzliche Winkel wird durch einen elektronischen Regler gesteuert und dient beispielsweise zur Erhöhung der Stabilität und Agilität des Fahrzeugs. Es werden hydraulische oder elektrische Aktuatoren verwendet. Das Dokument DE10023 584 A1 offenbart eine Überlagerungslenkung nach dem Oberbegriff des Anpruchs 1.

Es ist die Aufgabe der Erfindung, eine Überlagerungslenkung zu schaffen, mit welcher dem vom Fahrer eingegebenen Lenkwinkel ein weiterer Winkel auf sichere und zuverlässige Weise überlagert werden kann. Dabei soll der Antrieb für die Überlagerungslenkung einfach in das Lenksystem zu integrieren sein und nur einen geringen Bauraum beanspruchen.

Die Aufgabe wird durch die Merkmale des Patentanspruchs 1 gelöst. Spezielle Ausgestaltungen der Erfindung sind in den Unteransprüchen angegeben.

Die Erfindung wird anhand eines Ausführungsbeispiels und anhand von Abbildungen (Fig. 1 bis Fig. 18) beispielhaft näher erläutert.
Fig. 1 zeigt eine Überlagerungslenkung, die auf eine konventionelle hydraulische Servolenkung aufbaut.
Fig. 2 zeigt wesentliche Elemente der Überlagerungslenkung in einer perspektivischen Ansicht.
Fig. 3 zeigt die einzelnen, räumlich voneinander getrennten Elemente der Überlagerungslenkung.
Fig. 4 zeigt die in Fig. 3 dargestellten Elemente in einer perspektivischen Ansicht.
Fig. 5 zeigt die wesentlichen Elemente der Überlagerungslenkung in einem Querschnitt.
Fig. 6 zeigt die einzelnen, räumlich voneinander getrennten Elemente der Überlagerungslenkung in einem Querschnitt.
Fig. 7 zeigt zwei modulare Baugruppen des erfindungsgemäßen Überlagerungsgetriebes.
Fig. 8 zeigt die zwei modularen Baugruppen des Überlagerungsgetriebes als einzelne, räumlich voneinander getrennten Elemente.
Fig. 9 zeigt einen Ausschnitt aus einer Sekundärgetriebe-Baugruppe des Überlagerungsgetriebes.
Fig. 10 zeigt einzelne, räumlich voneinander getrennte Elemente des Sekundärgetriebes in einem Querschnitt.
Fig. 11 zeigt einen Ausschnitt aus der Sekundärgetriebe-Baugruppe des Überlagerungsgetriebes bei einem Zustand in einem nominellem Lastbereich des Getriebes, in dem der Überlagerungsaktuator (E-Motor).
Fig. 12 zeigt einen Ausschnitt aus der Sekundärgetriebe-Baugruppe des Überlagerungsgetriebes bei einem Zustand eines Grenzbereichs des nominellen Lastbereich.
Fig. 13 zeigt einen Ausschnitt aus der Sekundärgetriebe-Baugruppe des Überlagerungsgetriebes bei einem Zustand in einem Überlastbereich, in dem der Überlagerungsaktuator (E-Motor) zu große Kräfte bzw. Momente erzeugt.
Fig. 14 zeigt die Verriegelungseinheit in einer vergrößerten Darstellung.
Fig. 15 zeigt einen ersten Ausschnitt aus der Verriegelungseinheit im "offenen" Zustand.
Fig. 16 zeigt einen zweiten Ausschnitt aus der Verriegelungseinheit im "offenen" Zustand.
Fig. 17 zeigt den ersten Ausschnitt aus der Verriegelungseinheit im "geschlossenen" Zustand.
Fig. 18 zeigt den zweiten Ausschnitt aus der Verriegelungseinheit im "geschlossenen" Zustand.

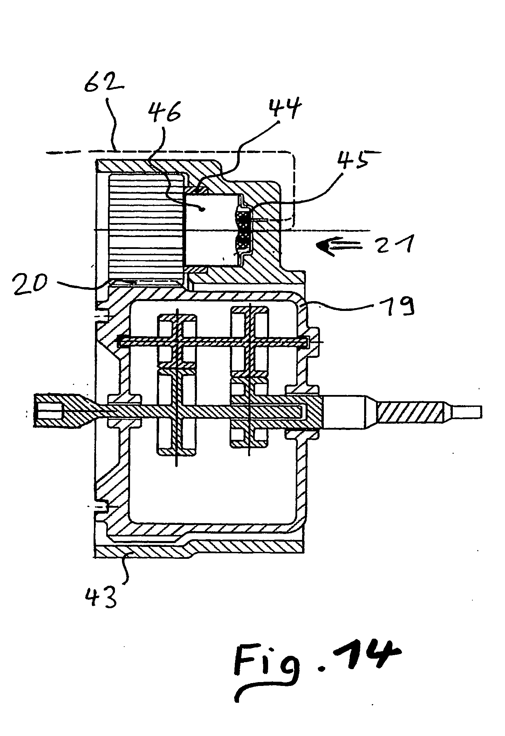

Die (21) ist vorzugsweise eine vormontierte und geprüfte, einzeln handhabbare Baugruppe und wird in das Primärgetriebegehäuse (43) form- und kraftschlüssig mittels des Innenringes (44) axial montiert. Bei der Montage der Verriegelungseinheit (21) kann gleichzeitig eine Kontaktierung (45) eines integrierten Betätigungsmagneten (46) zur internen oder externen Leiterbahn (gestrichelte Linie 62 in Fig. 14) erfolgen.

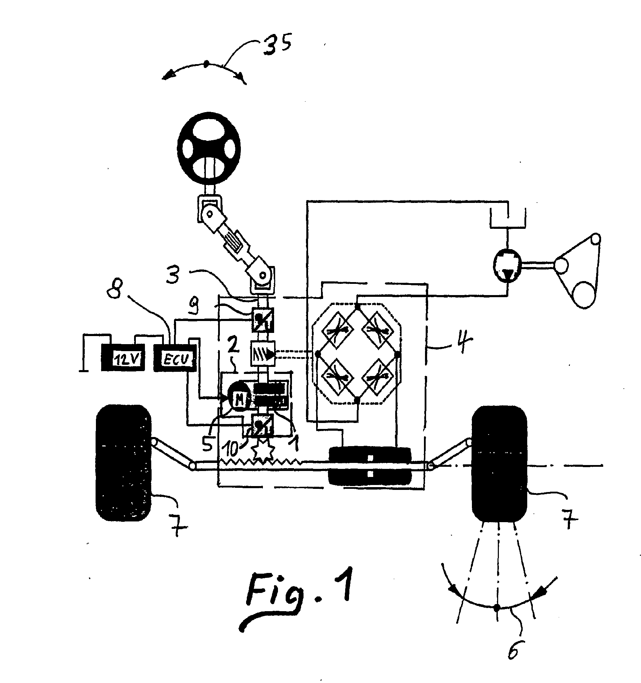

Ein Anwendungsfall der Überlagerungslenkung (ESAS/ Electric Steer Assisted Steering) zeigt Fig. 1 in einer schematischen Übersicht.

Hierbei wird ein Überlagerungsgetriebe (1) einer Überlagerungslenkung (2) in die geteilte Lenksäule (3) einer konventionellen Servolenkung (4) integriert. Durch den Eingriff eines angeordneten E-Motors (5) kann durch das Überlagerungsgetriebe (1) ein zusätzlicher oder reduzierter Lenkwinkel (6) an den Vorderräder (7) erzeugt werden (variable Lenkwinkel). Der variable Lenkwinkel wird durch einen Regler (8) eingestellt, welcher den E-Motor (5) steuert. Dem Regler (8) werden Signale von Drehwinkelsensoren (9,10) zugeführt, mittels denen der Drehwinkel der Lenksäule (3) vor und nach dem Überlagerungsgetriebe (1) erfasst wird. Durch die Überlagerung (6) kann entsprechend einer erkannten Fahrsituation das Fahrverhalten und die Fahrzeugdynamik positiv beeinflusst werden. Insbesondere können fahrdynamische Lenkungseingriffe realisiert werden, um den Fahrer bei seiner Lenktätigkeit zu unterstützen. Die Überlagerungslenkung (2) ist dabei als ein Modul in die konventionellen Servolenkung (4) integriert.

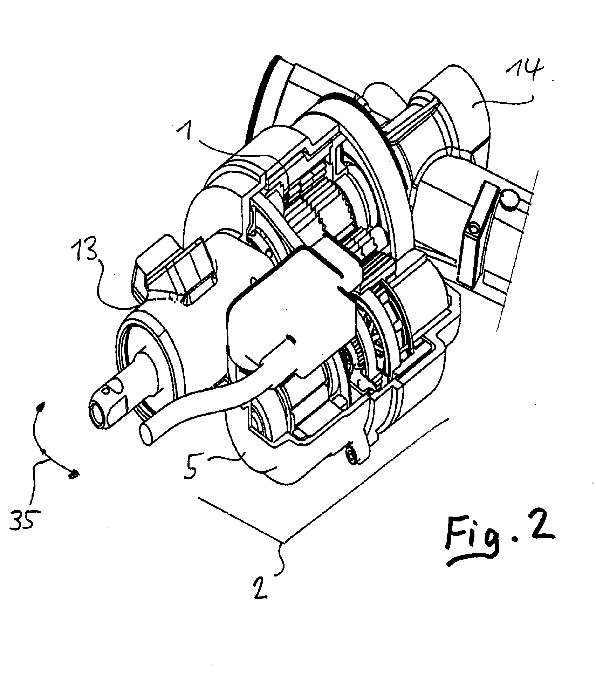

Wesentliche Elemente der Überlagerungslenkung (2) sind in Fig. 2 in einer perspektivischen Ansicht darstellt.

Die Überlagerungslenkung (2) weist das eigentliche Überlagerungsgetriebe (1) mit E-Motor (5) als modular aufgebaute Hauptbaugruppe auf. Darüber hinaus sind der Überlagerungslenkung (2) im wesentlichen zwei weitere modular aufgebaute Hauptbaugruppen zugeordnet: ein im wesentlichen konventionelles Lenkventil (13) und ein im wesentlichen konventionelles Lenkgetriebe (14).

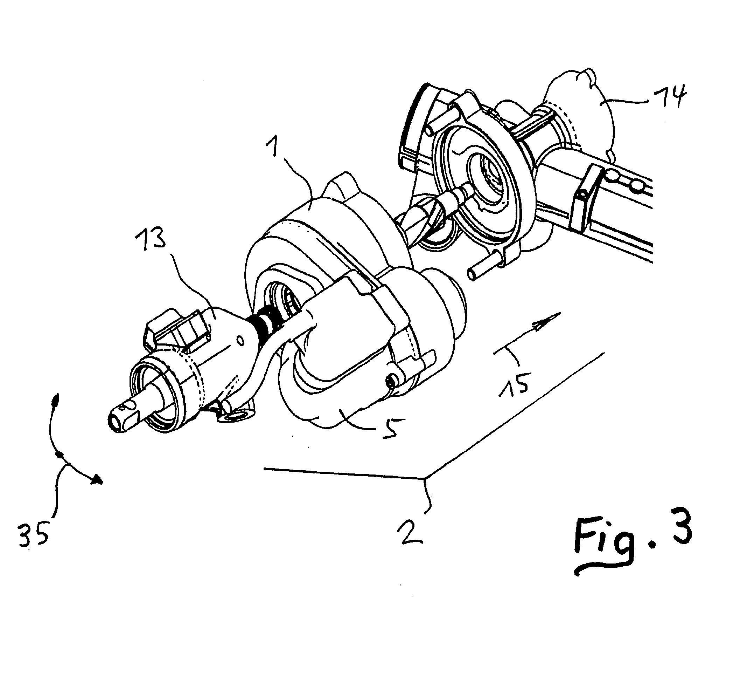

Fig. 3 zeigt die in Fig. 2 dargestellte Überlagerungslenkung (2) in einer Ansicht, bei der die einzelnen Elemente oder Hauptbaugruppen räumlich voneinander getrennt sind.

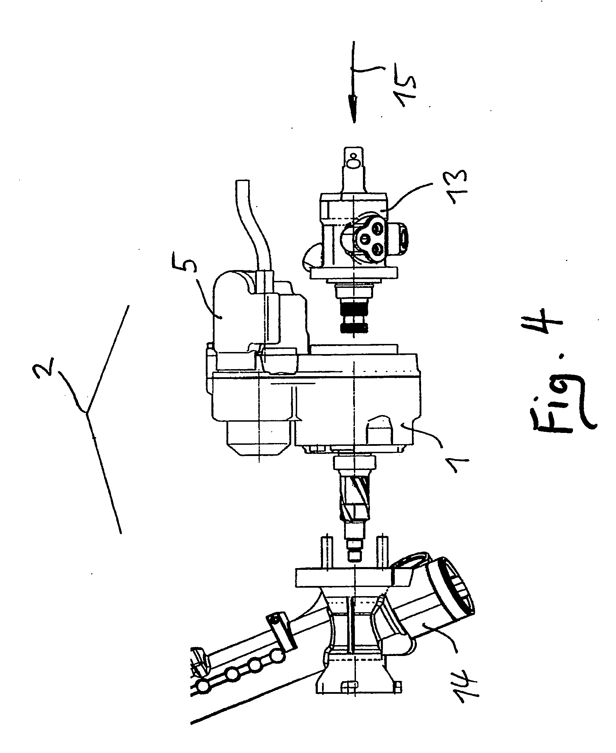

In der Fig. 4 sind die in Fig. 3 dargestellten Elemente der Überlagerungslenkung (2) in einer perspektivischen Ansicht dargestellt.

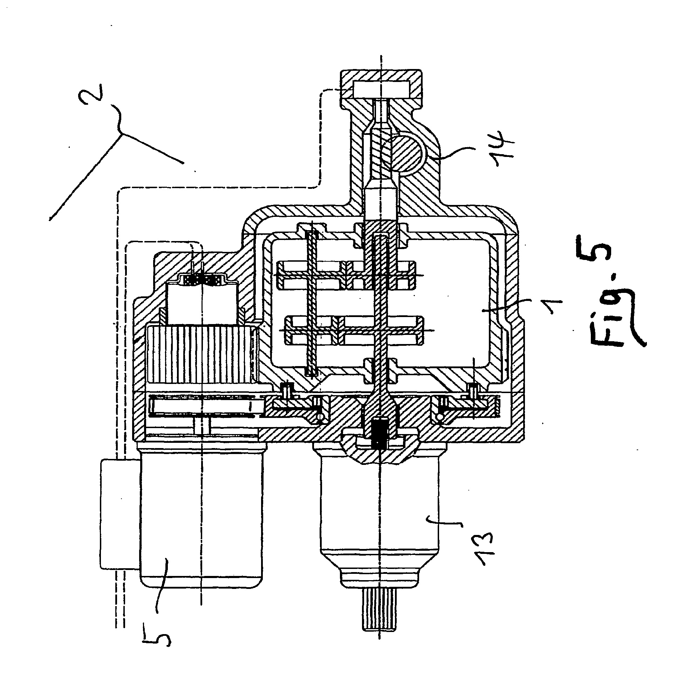

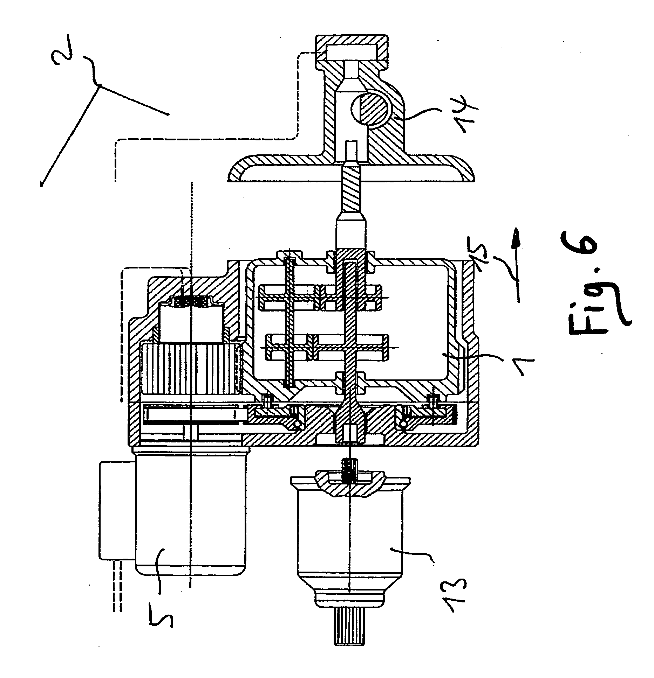

In der Fig. 5 sind die wesentlichen Elemente der Überlagerungslenkung in einem Querschnitt gezeigt und in der Fig. 6 werden diese einzelnen Elemente der Überlagerungslenkung räumlich voneinander getrennt in einem Querschnitt dargestellt.

Durch die Bauweise der einzelnen Elemente (1 mit 5,13,14) als einzeln handhabbare Baugruppen bzw. Module sind die Baugruppen in ihrer Grundfunktion einzeln prüfbar und axial (siehe Pfeil 15) zu dem Gesamtsystem der Überlagerungslenkung (2) montierbar.

Dies ermöglicht Vorteile in einer Serienfertigung des Lenkungssystems. Denn durch den modularen Aufbau ist eine Endmontage vorab geprüfter Baugruppen möglich. Zudem lässt sich die zentrale Einheit des Überlagerungsgetriebes (1) durch diesen modular gewählten Aufbau leicht in bestehende hydraulische Lenksysteme (4) integrieren.

Der konstruktive Aufbau und das Antriebs- und Sicherheitskonzept des integrierten Überlagerungsgetriebes (1) nach der Erfindung wird im folgenden beschrieben.

Dabei ist es vorgesehen, dass eine Trennung des Antriebs- und Sicherheitskonzeptes erfolgt. Dadurch kann vorteilhaft eine hohe Systemdynamik erzielt werden, was insbesondere für eine verbesserte Fahrdynamikregelung, wie ESP II, nutzbar ist.

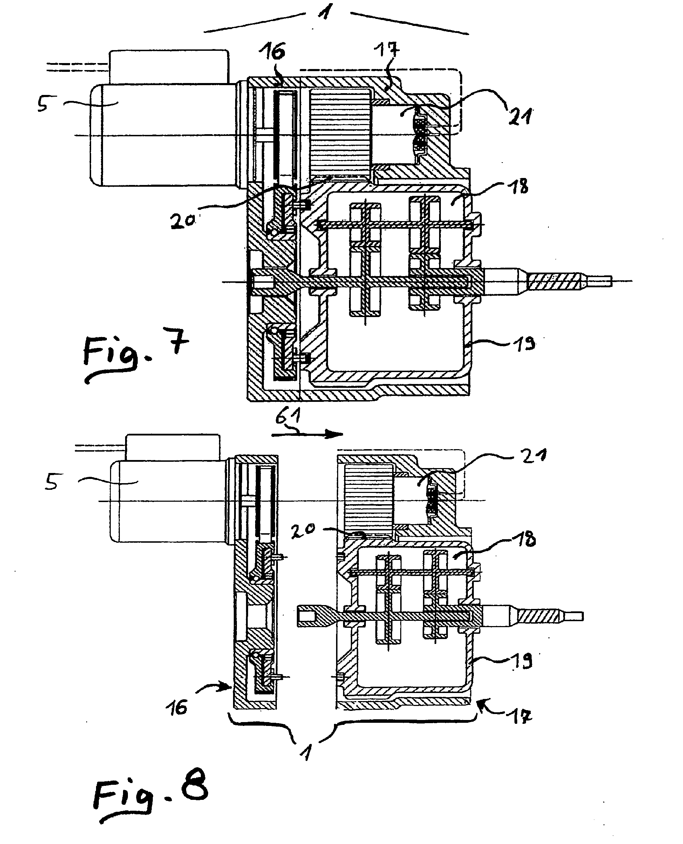

Es wird zunächst der Aufbau und die Funktion des gesamten Überlagerungsgetriebes näher beschrieben (siehe Fig. 7 und Fig. 8).

Die Baugruppedes Überlagerungsgetriebes (1) selbst weist zwei modulare Baugruppen auf: ein Sekundärgetriebe (16) und ein Primärgetriebe (17). Dies ermöglicht eine einfache axiale Montage (siehe Pfeil 61) des Überlagerungsgetriebes (1).

Das Primärgetriebe (17) weist eine integrierte Verrieglungseinheit (21) auf. Die Verriegelung des Überlagerungsgetriebes (1) bei Auftreten eines Fehlerfalles erfolgt über diese formschlüssig verbundene, mitlaufende, elektrisch betätigte Verriegelungseinheit (21). Diese kann auch als einzeln handhabbare Baugruppe ausgeführt werden. Die formschlüssige Verbindung erfolgt hier über eine Stirnverzahnung (20). Die Verriegelung erfolgt durch ein Blockieren und damit sicheres Verriegeln des Planetenträgergehäuses (19). Die elektrisch betätigte Verriegelungseinheit (21) ist vorzugsweise im bestromten Zustand offen.

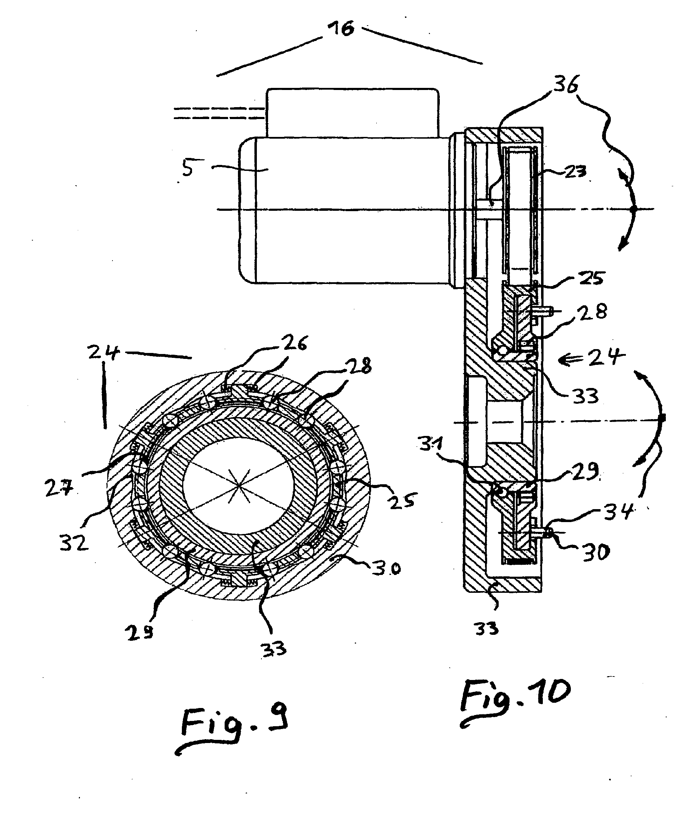

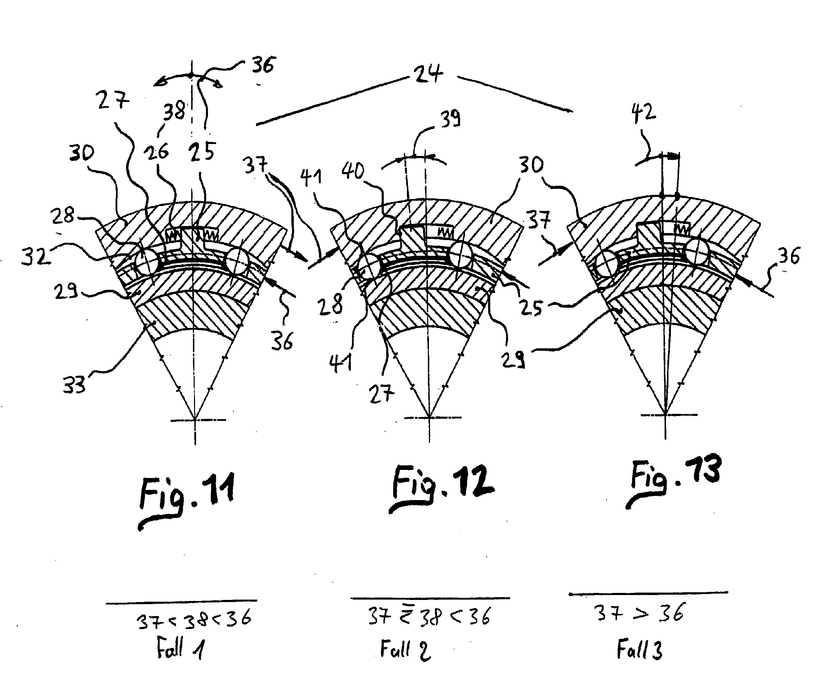

Das Sekundärgetriebe (16) ist näher in den Fig. 9 und Fig. 10 gezeigt. Seine Funktion eines selbsthemmenden Getriebes, im folgenden auch als "Diodenfunktion" bezeichnet, ist mittels der Fig. 11 bis Fig. 13 dargestellt.

Das Sekundärgetriebe (16) besteht im wesentlichen aus einem Antriebsmotor, dem E-Motor (5), einem Stirn- oder Riemenantriebsrad (23), einem Sekundärgetriebegehäuse (33) und einer Primärgetriebe-Antriebseinheit (24).

Die Primärgetriebe-Antriebseinheit (24) besteht im wesentlichen aus einem Abtriebsrad (25), einer Freilauffeder (26), einer Klemmkörperfeder (27), einem Klemmkörper (28), einem Klemm- und Lagerungsring (29), einer Kupplung des Primärgetriebes (30), einem Sekundärgetriebelager (31) und aus Klemmrampen (32).

Das Sekundärgetriebe (16) ist eine vormontierte prüfbare Einheit und überträgt nach der Montage der Primärgetriebeeinheit (17) das Antriebsmoment (34) mittels der Kupplung des Primärgetriebes (30) auf das Planetenradgetriebe (18).

Die Funktion der Primärgetriebe-Antriebseinheit (24) wird im folgenden beschrieben.

In einem nominellen Bereich des Lenkmoments (35, siehe Fig. 1 bis Fig. 3), vorzugsweise in einem Lenkmoment-Bereich von ca. 5 bis 10 Nm, ist das Motorantriebsmoment (36) des Antriebsmotors (5) so bemessen, dass statisch und dynamisch der geforderte Überlagerungswinkel mittels des Sekundärgetriebes (16) und des Primärgetriebes (17) auf das Lenkventil (13) und schließlich auf das Lenkgetriebe (14) überträgt. Dass bedeutet, das Rückwirkmoment (37) ist kleiner (<) als das Motorantriebsmoment (36) (Fall 1., siehe Fig. 11).

Wenn das aufgebrachte Lenkmoment (35, siehe Fig. 1 bis Fig. 3) den nominellen Bereich verlässt, das bedeutet es wird größer als ca. 10 Nm, so könnte das Motormoment (36) das Rückwirkmoment (37) nicht abstützen, das über das Primärgetriebe (17) und das Sekundärgetriebe (16) erzeugt wird und es könnte dabei den Motor (5) zurückdrehen. In diesem Fall ist also das Rückwirkmoment (37) größer (>) als das Motorantriebsmoment (36), (Fall 3, siehe Fig. 13). Dies hätte zur Folge, dass die geforderte Lenkbewegung nicht mehr auf das Lenkgetriebe (14) übertragen wird. Das aufgebrachte Lenkmoment (35) kann den nominellen Bereich z.B. im Missbrauchsfall, wie bei einem Test einer Lenkbewegung an einer Bordsteinkante, verlassen. Die in die Primärgetriebe-Antriebseinheit (24) vorteilhaft baulich integrierte und hier sog. "Diodenfunktion" verhindert dieses Zurückdrehen der Primärgetriebe-Antriebseinheit (14) bei Überlast, dass bedeutet dann, wenn das Rückwirkmoment (37) größer (>) ist als das Motorantriebsmoment (36).

Diese sog. "Diodenfunktion" wird im folgenden beschrieben (siehe Fig. 11 bis Fig. 13).

Die "Diodenfunktion" ist innerhalb der Primärgetriebe-Antriebseinheit (24) integriert und wird durch einen beidseitig wirkenden momentengesteuerten Freilauf realisiert.

Im nominellen Bereich ist die "Diodenfunktion" nicht aktiviert. Hier ist das Rückwirkmoment (37) kleiner (<) als das Freilaufaktivierungsmoment (38) und kleiner (<) als das Motorantriebsmoment (36) (Fall 1, vgl. Fig. 11)).

In diesem Fall wird das vom Motor (5) erzeugte Motorantriebsmoment (36) über das Abtriebsrad (25) und die vorgespannten Freilauffeder (26) auf die Kupplung des Primärgetriebes (30) übertragen. Durch die gezielte Vorspannung der Freilauffedern (26) findet unterhalb eines definierten Freilaufaktivierungsmomentes (38) keine rotatorische Relativbewegung zwischen Abtriebsrad (25) und der Kupplung des Primärgetriebes (30) statt. Hierbei werden die Klemmkörper (28) mittels der Klemmkörperfeder (27) an die in die Kupplung des Primärgetriebe (30) integrierte Klemmrampe (32) angedrückt und laufen ohne Formschluss rotatorisch zum Klemmring und Lagerungsring (29) mit, die auf das Sekundärgetriebegehäuse (33) aufgepresst sind.

Oberhalb des nominellen Bereichs ist die Diodenfunktion aktiviert. Hier ist das Rückwirkmoment (37) kleiner oder gleich (=<) dem Freilaufaktivierungsmoment (38) und kleiner (<) dem Motorantriebsmoment (36) (Fall 2, siehe Fig. 12).

In diesem Fall überschreitet das vom Motor (5) erzeugte Motorantriebsmoment (36) das Freilaufaktivierungsmoment (38) und aktiviert somit die "Diodenfunktion". Hierbei kommt es zur rotatorischen Relativbewegung (39) zwischen dem Abtriebsrad (25) und der Kupplung des Primärgetriebes (30) und zu einer formschlüssigen Anlage (40). Gleichzeitig wird der Klemmkörper (28) mittels der integrierten Klemmkörperfeder (27) zwischen der Klemmrampe (32) und dem Klemm- und Lagerungsring (29) zur Anlage (41) gebracht. Das bedeutet, die "Diodenfunktion" ist aktiv geschaltet und der Antriebsmotor (22) kann bis zu seinem maximal möglichen Motorantriebsmoment (36) das Primärgetriebe (17) antreiben.

Im Überlast-Bereich ist die "Diodenfunktion" aktiv. In diesem Bereich ist das Rückwirkmoment (37) größer (>) als das Freilaufaktivierungsmoment (38) und größer (>) als das Motorantriebsmoment (36) (Fall 3, siehe Fig. 13).

In diesem Fall überschreitet das Rückwirkmoment (37) das vom Motor (5) erzeugte Motorantriebsmoment (36) und das Freilaufaktivierungsmoment (38). Dieser Fall liegt außerhalb des nominellen Betriebszustandes der Überlagerungslenkung (2) und kann z.B. durch Anfahren an einen Bordstein hervorgerufen werden.

Ein Zurückdrehen (42) des Antriebsmotors (5) infolge des Rückwirkmomentes (37) wird nun durch den zwischen Kupplung des Primärgetriebes (30) und Klemm- und Lagerungsring (29) eingespannten Klemmkörper (28) verhindert. Dass bedeutet, das Primärgetriebe (17) wird mechanisch zum Sekundärgetriebegehäuse (33) blockiert. Durch das mechanische Blockieren des Primärgetriebes (17) kann nun außerhalb des nominellen Lenkbereiches, im Missbrausfall, eine Stellbewegung auf das Lenkgetriebe (12) ohne Aktivierung der Verriegelungseinheit (21) übertragen werden.

Die in das Sekundärgetriebe (16) integrierte "Diodenfunktion" bildet von seinem mechanischen Verhalten ein selbsthemmendes Getriebe, wie z. B. ein Schneckenradgetriebe, ab. Die in das Sekundärgetriebe (16) integrierte "Diodenfunktion" ist aber im Gegensatz zu einem selbsthemmenden Getriebe im wesentlichen frei und unabhängig von geometrischen Randbedingungen zu gestalten.

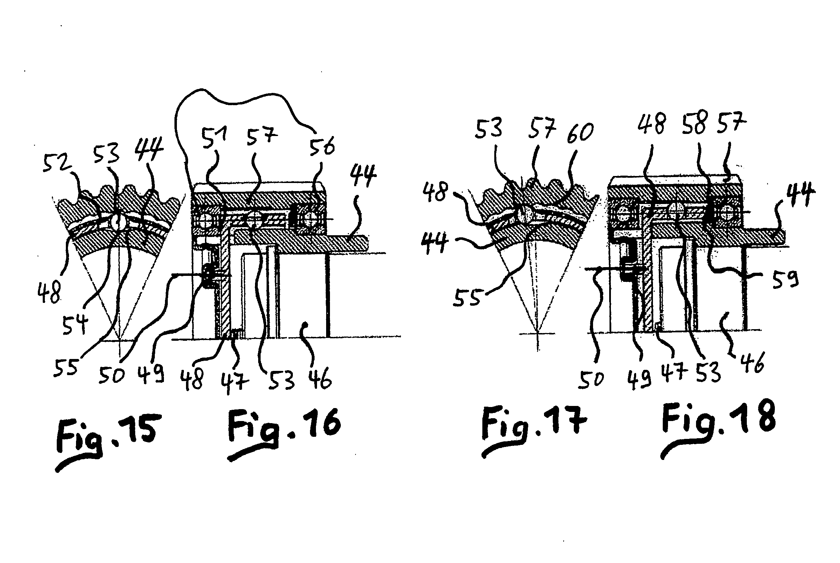

Die elektrisch betätigte Verriegelungseinheit (21) wird im folgenden näher beschrieben (siehe Fig. 12 bis Fig. 16).

Wie zuvor beschrieben, verriegelt die parallel mitlaufende Verriegelungseinheit (21) über eine formschlüssige Verbindung, wie z. B. eine Stirnverzahnung (20), das Planetenträgergehäuse (19) bei Auftreten eines Fehlerfalles (Stromausfall, Plausibilitätsfehler). Somit wird ein unkontrollierter Überlagerungseingriff mechanisch verhindert. Die Lenkfähigkeit des Fahrzeuges bleibt mit der gewohnten Lenkübersetzung erhalten.

Die Verriegelungseinheit (21) ist vorzugsweise eine vormontierte und geprüfte, einzeln handhabbare Baugruppe und wird in das Primärgetriebegehäuse (43) form- und kraftschlüssig mittels des Innenringes (44) axial montiert. Bei der Montage der Verriegelungseinheit (21) kann gleichzeitig eine Kontaktierung (45) eines integrierten Betätigungsmagneten (46) zur internen oder externen Leiterbahn (gestrichelte Linie 62 in Fig. 14) erfolgen.

Die Normalfunktion der Überlagerungslenkung wird im folgenden näher beschrieben.

In der Normalfunktion der Überlagerungslenkung (21) ist der Betätigungsmagnet (46) bestromt. Hierbei drückt ein Betätigungsstößel (47) des Betätigungsmagneten (46) einen Betätigungsring (48) gegen eine Federkraft (50) auf einen mechanischen Anschlag (51). Die Federkraft (50) wird von einer redundant ausgeführten Druckfeder (49) erzeugt. In dieser frei geschalteten Stellung werden die im Betätigungsring (48) formschlüssig und mittels integrierter Druckfedern (52) kraftschlüssig gefesselten Klemmkörper (53) in die unteren Lagerungspunkte (54) der in den Innenring (44) integrierten Klemmrampen (55) angedrückt. Somit kann der auf dem Innenring (44) mittels der Lagerung (56) gelagerte, stirnverzahnte und vom Planetenträgergehäuse (19) mitgeschleppten Außenring (57) frei umlaufen.

Eine nicht aktive Funktion oder Fehlfunktion der Verriegelungseinheit (21) ist im folgenden näher beschrieben.

In der nicht aktiven oder Fehlfunktion der Überlagerungslenkung (1) ist der Betätigungsmagnet (46) stromlos, das bedeutet er wird nicht bestromt. Die von der Druckfeder (49) erzeugte Federkraft (50) drückt den kraftlosen Betätigungsstößel (47) des Betätigungsmagneten (46) und den Betätigungsring (48) stirnseitig an den im Außenring (57) gefesselten Anlaufring (58).

Die beiden Stirnseiten (59) des Betätigungsringes (48) und des Anlaufringes (58) sind verzahnt, wodurch ein hohes Betätigungsmoment auf den Betätigungsringes (48) bei Rotation des Planetenträgergehäuses / Außenringes / Anlaufringes (19/57/58) mittels der anstehenden Federkraft (50) übertragen wird.

Bei Drehung des Planetenträgergehäuses / Außenringes / Anlaufring (19/57/58) und das durch die Federkraft (50) hervorgerufene Betätigungsmomentes wird der Betätigungsring (48) mit den gefesselten Klemmkörpern (53) in rotatorische Bewegung gesetzt und bringt die Klemmkörper (53) zwischen dem an der Innenseite (60) profilierten Außenring (47) und der Klemmrampe (55) in eine formschlüssige Klemmstellung.

Ein unkontrolliertes Verdrehen des Planetenträgergehäuses (19) wird verhindert und ein Sperren der Überlagerungsfunktion wird somit erzielt.

Die bei der zuvor beschriebenen Ausführungsform dargestellte Trennung des Antriebs- und des Sicherheitskonzeptes ist ein wesentliches Merkmal des Überlagerungsgetriebes (1) nach der Erfindung. Durch die Trennung ergibt sich eine große Freiheit bezüglich der dynamischen Auslegung und Optimierung des parallel angeordneten Sekundärgetriebes (16) als Antrieb des Planetenradgetriebes (18).

## Patentansprüche

1. Überlagerungslenkung, bei der ein vom Fahrer eingegebener Lenkwinkel bei Bedarf durch einen weiteren Winkel überlagert werden kann, mit einem Überlagerungsgetriebe, **dadurch gekennzeichnet, dass** das Überlagerungsgetriebe zumindest ein Sekundärgetriebe-Modul (16) und ein Primärgetriebe-Modul (17) aufweist, und
dass das Sekundärgetriebe-Modul (16) einen Antriebsmotor (5), einen Stirn- oder Riemenantrieb (23) und eine Primärgetriebe-Antriebseinheit (24) aufweist und
die Primärgetriebe-Antriebseinheit (24) einen beidseitig wirkenden momentengesteuerten Freilauf aufweist,
der Mittel aufweist, damit in einem nominellen Bereich (25) des Lenkmoments, ein geforderter Überlagerungswinkel mittels des Sekundärgetriebe-Moduls (16) und des Primärgetriebe-Moduls (17) auf ein Lenkgetriebe (14) der Überlagerungslenkung übertragen wird,
und damit in einem Überlast-Fall, wenn das aufgebrachte Lenkmoment (35) den nominellen Bereich verlässt, ein Zurückdrehen der Primärgetriebe-Antriebseinheit (24) verhindert wird, wobei das Sekundärgetriebe-Modul (16) und Primärgetriebe-Modul (17) als einzeln handhabbare Baugruppen realisiert werden.

2. Überlagerungslenkung nach Anspruch 1,
**dadurch gekennzeichnet,**
**dass** die Primärgetriebe-Antriebseinheit (24) ein Abtriebsrad (25), eine Freilauffeder (26), eine Klemmkörperfeder (27), einen Klemmkörper (28), einen Klemm- und Lagerungsring (29), eine Kupplung des Primärgetriebes (30), ein Sekundärgetriebelager (31) und Klemmrampen (32) aufweist.

3. Überlagerungslenkung nach einem der Ansprüche 1 oder
**dadurch gekennzeichnet,**
**dass** das Primärgetriebe-Modul (17) eine Planetengetriebeeinheit (18) und eine Verriegelungseinheit (21) aufweist.

4. Überlagerungslenkung nach Anspruch 3,
**dadurch gekennzeichnet,**
**dass** als Verriegelungseinheit (21) ein Modul in dem Primärgetriebe bzw. dem Primärgetriebegehäuse (43) vorgesehen ist, welches Mittel aufweist zur Verriegelung des Überlagerungsgetriebes (1) im Fehlerfall.

5. Überlagerungslenkung nach Anspruch 4,
**dadurch gekennzeichnet,**
**dass** die Überlagerungslenkung ein Planetengetriebe als Überlagerungsgetriebe aufweist, dass die Verriegelungseinheit (21) elektrisch betätigbar ist und über eine formschlüssige Verbindung, vorzugsweise eine Stirnverzahnung (20), das Planetenträgergehäuses (19) bei Auftreten eines Fehlerfalles verriegelt.

## Claims

1. Superimposed steering system, in which a steering angle which is input by the driver can have a further angle superimposed on it if required, having a superimposition gear mechanism, **characterized in that** the superimposition gear mechanism has at least one secondary gear-mechanism module (16) and one primary gear-mechanism module (17), and **in that** the secondary gear-mechanism module (16) has a drive motor (5), a spur pinion or belt drive (23) and a primary gear-mechanism drive unit (24), and the primary gear-mechanism drive unit (24) has a moment-controlled free wheel which acts on both sides and has means, in order that, in a nominal range (25) of the steering moment, a required superimposition angle is transmitted by means of the secondary gear-mechanism module (16) and the primary gear-mechanism module (17) to a steering gear (14) of the superimposed steering system, and in order that, in an overload case when the applied steering moment (35) departs from the nominal range, reverse rotation of the primary gear-mechanism drive unit (24) is prevented, the secondary gear-mechanism module (16) and the primary gear-mechanism module (17) being realized as assemblies which can be managed individually.

2. Superimposed steering system according to Claim 1, **characterized in that** the primary gear-mechanism drive unit (24) has an output gear (25), a free-wheel spring (26), a clamping-body spring (27), a clamping body (28), a clamping and bearing ring (29), a coupling of the primary gear mechanism (30), a secondary gear-mechanism bearing (31) and clamping ramps (32).

3. Superimposed steering system according to either of Claims 1 and 2, **characterized in that** the primary gear-mechanism module (17) has a planetary gear-mechanism unit (18) and a locking unit (21).

4. Superimposed steering system according to Claim 3, **characterized in that** a module is provided as locking unit (21) in the primary gear mechanism or the primary gear-mechanism housing (43), which module has means for locking the superimposition gear mechanism (1) in the case of a fault.

5. Superimposed steering system according to Claim 4, **characterized in that** the superimposed steering system has a planetary gear mechanism as superimposition gear mechanism, **in that** the locking unit (21) can be actuated electrically and locks the planetary carrier housing (19) via a positively locking connection, preferably a spur toothing system (20), if a fault case occurs.

## Revendications

1. Direction à superposition dans laquelle un angle de braquage indiqué par le conducteur peut être superposé en cas de besoin à un autre angle, avec un engrenage de superposition, **caractérisée en ce que** l'engrenage de superposition comporte au moins un module d'engrenage secondaire (16) et un module d'engrenage primaire (17) ; et
**en ce que** le module d'engrenage secondaire (16) comporte un moteur d'entraînement (5), un entraînement frontal ou par courroie (23) et une unité d'entraînement à engrenage primaire (24) ; et
**en ce que** l'unité d'entraînement à engrenage primaire (24) comporte une roue libre commandée par couple à action bilatérale qui présente des moyens pour transmettre dans une plage nominale (25) du couple de braquage un angle de superposition demandé à l'aide du module d'engrenage secondaire (16) et du module d'engrenage primaire (17) sur un mécanisme de direction (14) de la direction à superposition ;
et ainsi empêcher, en cas de surcharge, lorsque le couple de braquage (35) appliqué sort de la zone nominale, un retrait de l'unité d'entraînement à engrenage primaire (24), le module d'engrenage secondaire (16) et le module d'engrenage primaire (17) étant réalisés comme des sous-groupes manipulables séparément.

2. Direction à superposition selon la revendication 1, **caractérisée en ce que** l'unité d'entraînement à engrenage primaire (24) comporte une roue de sortie (25), un ressort de roue libre (26), un ressort de corps de serrage (27), un corps de serrage (28), une bague de serrage et de fixation (29), un coupage d'engrenage primaire (30), un palier d'engrenage secondaire (31) et des rampes de serrage (32).

3. Direction à superposition selon l'une quelconque des revendications 1 ou 2, **caractérisée en ce que** le module d'engrenage primaire (17) comporte une unité d'engrenage planétaire (18) et une unité de verrouillage (21).

4. Direction à superposition selon la revendication 3, **caractérisée en ce que** l'unité de verrouillage (21) prévue est un module disposé dans l'engrenage primaire et/ou dans le boîtier d'engrenage primaire (43) qui comporte des moyens pour le verrouillage de l'engrenage de superposition (1) en cas de dysfonctionnement.

5. Direction à superposition selon la revendication 4, **caractérisée en ce que** la direction à superposition comporte un engrenage planétaire servant d'engrenage de superposition, ledit engrenage pouvant être actionné électriquement par l'intermédiaire d'une unité de verrouillage (21) et verrouillant le boîtier de support d'engrenage (19) par l'intermédiaire d'une jonction par complémentarité de forme, de préférence un engrènement frontal (20), en cas de dysfonctionnement.
